Europäisches Patentamt

(19) European Patent Office

Office européen des brevets

(11) Publication number: **0 295 899 B1**

# (12) EUROPEAN PATENT SPECIFICATION

(45) Date of publication of patent specification :
30.10.91 Bulletin 91/44

(51) Int. Cl.⁵ : **B60C 9/18**

(21) Application number : **88305480.1**

(22) Date of filing : **15.06.88**

(54) Motorcycle tyres.

(30) Priority : 19.06.87 JP 154068/87

(43) Date of publication of application :
21.12.88 Bulletin 88/51

(45) Publication of the grant of the patent :
30.10.91 Bulletin 91/44

(84) Designated Contracting States :
DE FR IT

(56) References cited :
EP-A- 0 157 617
US-A- 3 674 078
US-A- 3 983 919
US-A- 4 295 512

(73) Proprietor : SUMITOMO RUBBER INDUSTRIES
LIMITED
No. 1-1, Tsutsui-cho 1-chome
Chuo-ku Kobe-shi Hyogo 651 (JP)

(72) Inventor : Noma, Hiroyuki
16-3 Suzurandai Kitamachi 3-chome, Kita-ku
Kobe-shi Hyogo-ken (JP)

(74) Representative : Stewart, Charles Geoffrey
SP TYRES UK LIMITED Tyre Technical
Division
Fort Dunlop Birmingham B24 9QT (GB)

## Description

The present invention relates to a motor-cycle tyre and more particularly to a radial tyre for motor-cycles, which has good high speed steering stability, and in which ply separation in the breaker edge regions is lessened.

Recently, opportunities to run vehicles at high speed have increased still further and good high speed characteristics are required for motor-cycle tyres.

The tyres which have been mainly used for motor-cycles, are cross-ply tyres in which the carcass ply cords are arranged at an angle of 30 to 60 degrees to the tyre circumferential direction so that the cords of each ply cross with those of the next ply. The reason is that motor-cycles basically differ from four-wheeled vehicles such as passenger cars particularly in behaviour when cornering. In order to turn, a motor-cycle has to be inclined (to give a camber angle), by which a force (camber thrust) parallel to the road surface is produced in the same direction as that of the inclination of the machine, and which force acts on the tyre and balances with the centrifugal force thereon. Thus motor-cycle tyres are requested to have characteristics which provide a steady camber thrust. Accordingly, the above-mentioned cross-ply construction has been applied to motor-cycle tyres to provide the lateral rigidity needed and to maintain the camber thrust. So far carcasses of a radial construction with resultant poor lateral rigidity have not been used due to these requirements.

Cross-ply tyres, however, have drawbacks in that lateral vibrations (of a weave mode), due to the relationships between the lateral rigidity of a tyre and its cornering power, are liable to occur during high speed straight running and in general, the wear resistance is poor. Accordingly, measures to increase the rigidity of tyre, for example, to increase the number of plies in the carcass, to vary the angles of the carcass ply cords and the likes, have been taken as countermeasures. It is, however, very difficult to completely remove the drawbacks thereof as far as the cross-ply construction is employed.

Recently, therefore, it has been proposed to use radial ply tyres to try to solve the above-mentioned drawbacks of the conventional cross-ply construction. However, it is found that when a radial ply construction is applied to motor-cycle tyres, separation of breaker edge portions from thus surrounding rubber frequently occurs unlike passenger car tyres, for the following reasons.

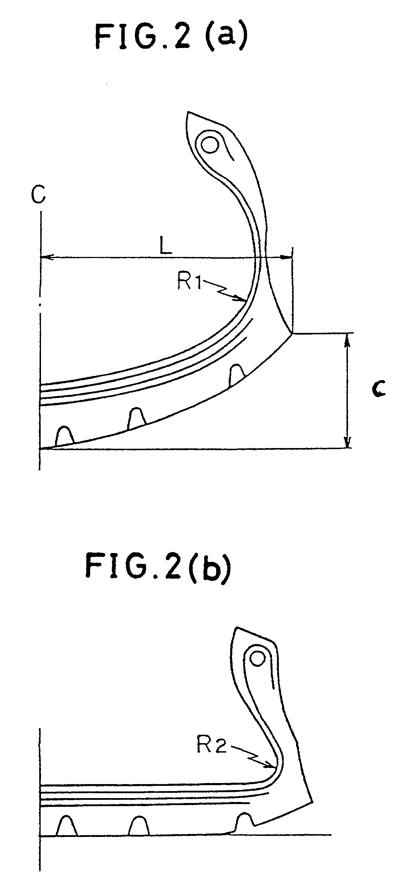

In motor-cycle tyres, typically as shown in Fig. 2 (a), the radius of curvature of the tread is small, that is, the camber value C/L is large. The breaker comprises at least one ply of cords extending across the whole width of the tread and so the tension in the breaker cords in the tread centre region is different from those in the tread edge regions. As a result, stress concentrates in the breaker edges.

Further, the tread is subjected to repeated deformation from the tyre unloaded or free state of Fig. 2 (a) to the loaded or ground contacting state of Fig. 2 (b) and vice versa. When the tread is deformed into the ground contacting state from the free state, the radius of curvature of the inner surface of the tyre shoulder is decreased to R2 (Fig. 2 (b)) from R1 (Fig. 2 (a). As a result, shear stress is generated on the breaker edges because they are located in such regions.

It has also been proposed to use low elasticity modulus cords, such as nylon cords, in place of the steel cords generally used for the breaker cords of radial tyres. In this case, however, due to the resulting low rigidity of breaker, the steering stability is poor.

It is therefore, an object of the present invention to provide a radial tyre for motor-cycles, in which the above-mentioned problems are solved, and ply separation in the edges of the breaker is lessened, and which has excellent steering stability in high speed running.

A known tyre according to the preamble of claim 1 is shown, e.g. in US-A-3674078.

According to the present invention, the motor-cycle tyre comprises a tread part, sidewall parts extending radially inward from the edges of the tread parts, bead parts radially inward of the sidewall parts, a carcass composed of radially arranged organic cords, the edges thereof turned up around bead cores, and a breaker disposed radially outside the carcass extending over almost entire width of the tread the breaker comprising at least one ply of organic fibre cords embedded in rubber composition containing 100 parts by weight of rubber and 10 to 70 parts by weight of carbon black, characterised in that the carbon black mean particle diameter is less than 25 nm, and the above mentioned rubber composition contains 0.5 to 5 parts by weight of thermosetting resin and 0.5 to 5 parts by weight of stiffening agent.

An embodiment of the present invention will be described by way of example only with reference to the accompanying drawings, in which :

Fig. 1. is a cross sectional part view of a tyre and

Fig. 2 (a) and (b) are schematic cross sectional part views showing the unloaded state and loaded ground contacting state of tyre, respectively.

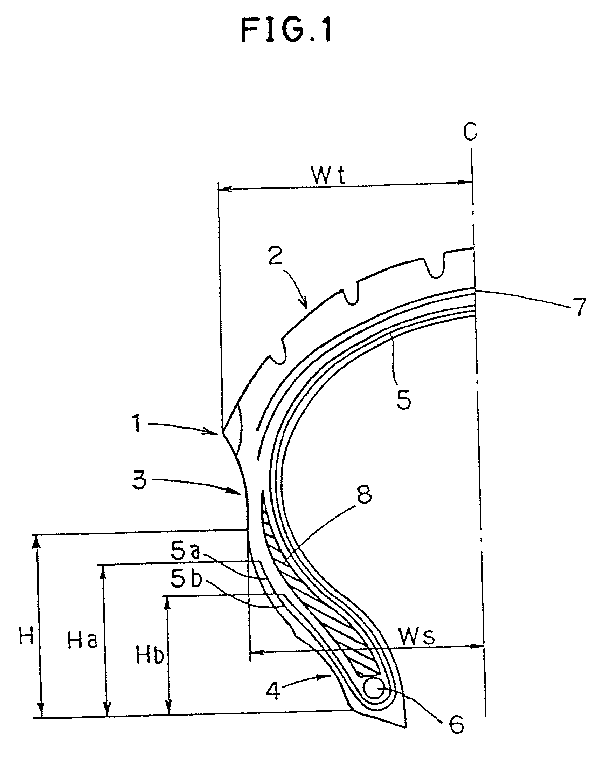

In Fig. 1 a tyre 1 has a tread 2, sidewalls 3, extending radially inwardly from the edges of the tread 2, and bead regions 4 located radially inwards of the sidewalls 3. The tyre 2 also comprises a pair of bead cores 6 one provided in each bead region 4, a pair of bead apexes 8 disposed one in each bead region 4, a carcass 5 extending between the bead regions 4, with the tread 2 thereon, and a breaker 7 between the carcass 5 and the tread 2.

The tread 2 extends from the equatorial plane of the tyre 1 towards each side thereof so that the tread width Wt exceeds the maximum tyre width Ws in the sidewall regions, so that when the motor-cycle and tyre are tilted, camber thrust is generated.

The outer profile of the tread is substantially parallel to the contour of the carcass 5.

The carcass 5 comprises two plies of cords. The edges of each ply are turned up around the bead cores 6 from the inside to the outside thereof. Each turnup is terminated in a region including the bead region 4 and the sidewall 3.

Preferably, one carcass ply turnup 5a is extended beyond the edge of the other carcass ply turnup 5b, which is located axially inside the turnup 5a, so as to completely cover the edge of the turnup 5b, so that stress concentration on the edge of the carcass ply turnup 5b is mitigated.

Furthermore, to reinforce the sidewalls 3, the heights Hb and Ha of the axially inner turnup 5b and the axially outer turnup 5a from the bead base, are respectively set in a range of 55 to 65% of and a range of 70 to 100% of the height H of the above mentioned maximum width (ws) point in the sidewall.

The cords of the carcass are arranged at an angle of 0 to 20 degrees to the radial direction of the tyre. If the angle is more than 20 degrees, the tyre cannot display the excellent high speed characteristics of radial tyres.

The cords of the carcass are made of organic fibres, such as nylon, polyester or rayon, having a modulus of tensile elasticity of less than 1500 kgf/mm$^2$ and more preferably less than 500 kgf/mm$^2$. The cords are arranged parallel to each other and embedded in coating rubber. For example, when the carcass cords are of nylon having a modulus of tensile elasticity of less than 500 kgf/mm$^2$ and a thickness of 1000 to 2000 denier, the modulus at 100% elongation of the above mentioned rubber is in a range of 20 to 70 kgf/cm$^2$ and the cord density is in a range of 35 to 60 cords per 5 cm width. In the tyre shown in Fig. 1 the edges of each carcass ply are turned up outwardly around the bead cores as described above. The carcass in the present invention is, however, able to employ (a) a structure in which the edges of the carcass ply are turned up around the bead cores from the outside to the inside thereof or (b) a combination structure of the former two.

The bead apexes 8 are made of hard rubber having JIS-A hardness of 65 to 95 degrees, and disposed between the region carcass ply and the carcass turnup 5a and 5b. Each bead apex extends decreasing in thickness from the bead core into the sidewall, preferably to a zone overlapped with the edge of the breaker 7, whereby the lateral stiffness of the region from the bead region to the sidewall is increased.

The breaker 7 is composed of plies of rubber coated parallel cords, including at least one ply the width of which is substantially equal to the width Wt of the tread 2. The cords of each ply are arranged at an angle of 5 to 30 degrees, and more preferably 10 to 25 degrees, with respect to the circumferential direction of the tyre. If the cord angle is too small, the tread stiffness is increased, and as a result impacts caused by pebbles on the road and roughness of the road are felt strongly by the driver, and the running stability as well as the ride comfort of the motor-cycle is impaired. On the other hand, too large an angle impairs the steering stability in high speed running.

Preferably, the material of the breaker ply cords is the same as that of the carcass ply cords, and then may well be organic fibres and especially nylon fibres, whose modulus of elasticity is less than 1500 kgf/cm$^2$. In this case, modulus of the carcass and that of the breaker are the same, so the stress concentration in each edge of the breaker is further alleviated. If 1000 to 2000 denier nylon fibre cords are used, then the 100% modulus of the rubber composition (coating rubber) and the density of the breaker cords are, for example, (a) 10 to 70 kgf/cm$^2$ and 30 to 60 cords/5 cm, or (b) 20 to 80 kgf/cm$^2$ and 35 to 65 cords/5 cm.

Heretofore, to reduce heat generation, there has been used for the breaker of passenger car radial tyres high elasticity modulus cords which are embedded in a rubber composition containing carbon black, for example HAR carbon black or the like, of which the mean particle diameter is relatively large.

The present invention, on the premise that the tread is relatively thin in thickness, maintains the steering stability and alleviates ply separation in the breaker edges by further reinforcing the coating rubber of the breaker and using organic fibre cords, such as nylon, polyester or the likes, having a low modulus of elasticity.

The above mentioned rubber composition of the breaker contain 100 parts by weight of rubber component and 10 to 70 parts by weight of carbon black whose mean particle diameter is less than 28 nm, and more preferably 25 nm.

When the mean particle diameter thereof is over 25 nm carbon black does not have sufficient reinforcing effect. And when the carbon black loading is less than 10 parts by weight, the strength of the rubber is not sufficient. On the other hand, when it is over 70 parts by weight, the elastic modulus of the rubber becomes so high that ply separation from the rubber is more apt to happen.

For the above mentioned carbon black, HAF, SAF, ISAF, ISAF-LS, HAF-HS or the like are usable.

Furthermore, the rubber composition of the breaker preferably contains 0.5 to 5, more preferably 1 to 3 parts by weight of thermosetting resin and 0.5 to 5 parts by weight of stiffening agent.

The thermosetting resin may be phenolic plastic, melamine resin, urea resin or the like, and most preferably phenolic plastic which can make cross-links to rubber. For example, the resin may be novolac condensation resin made from formalin and phenol or a derivative thereof, such as 0-cresol, p-creosol, bisphenol A, p-butylphenol, p-octylphenol, p-tertiarybutylphenol, p-tertiaryaminophenol, p-isopropyphenol, o-phenylphenol, p-dodecylphenol, p-stearylphenol, 3,5-xylenol, pentadecylphenol, resourcin, catechol, pyrogallol, hydrochinon, dihydroxyphenyl, 1,5-dihydrxynaphthalene, p-octylxcatechol, p-pohenylresorcin. In this case, the stiffening agent is one which can generate formaldehyde, such as hexamethlene tetramine.

The present invention is preferably applied to motor-cycle tyres of which the camber value is more than 0.2, more preferably more than 0.3. The camber value is shown in Fig. 2 (a) and is defined as the ratio (C/L) of the vertical distance C between the tread and the tread centre to the distance L of the tread edge from the equatorial plane of tyre.

To demonstrate the invention 140/80-17 rear motor-cycle tyres having the structure shown in Fig. 1 were manufactured by way of trial. The detailed specifications thereof are shown in Table 1.

Table 2 and Table 4 show the content of the rubber composition of each test tyre, and Table 3 and Table 5 show the results of the comparison tests.

The vibration naturally generating speed was evaluated in a feel test on a highway by a skilled test rider.

The test for durability was performed according to a test procedure specified in the JATMA Safety Standard for Automobile Tyre. That is, while the tyre is run at 80 km/h, both the tyre load and the running time are increased step by step as follows : 100% loads for 4 hours as the first step, 110% load for 6 hours as the second step, and 115% load for 24 hours as the third step, and then the tyre is continued to run under 200% load to the failure)séparation between carcass and breaker). The running time from the end of the third step to the time of tyre failure is measured.

The motor-cycle used in the field test was a HONDA VF1000R provided with a 120/180V16 cross ply tyre on the front wheel, and each test tyre of Table 1 was mounted on the rear wheel, and then the performance thereof was evaluated.

## TABLE 1

----

(1) CARCASS

| | |
|---|---|
| Construction | Radial |
| Ply number | 2 |
| Cord angle          (deg.) | 88 |
| (to circumferential direction) | |
| Material | Nylon |
| Denier | 2/1260d |

----

(2) BREAKER

| | |
|---|---|
| Width                    (mm) | 160/146 |
| Ply number | 2 |
| Material | nylon |
| Denier | 2/1890d |
| Cord angle (1st ply, 2nd ply)    (deg.) | 22,-22 |
| (to circumferential direction) | |

----

(3) BEAD APEX

| | |
|---|---|
| JIS hardness       (deg.) | 95 |
| Upper end height (from bead base) (mm) | 70 |

----

*1: Camber value of each tyre is 0.30.

TABLE 2

| Tyre | Ex1 | Ex2 | Ex3 | Ex4 | Ref1 | Ref2 |
|------|-----|-----|-----|-----|------|------|
| Natural rubber | 100 | 100 | 100 | 100 | 100 | 100 |
| Carbon black | | | | | | |
|   N220(ISAF) *1 | 70 | 60 | 20 | | | 10 |
|   N330(HAF) *2 | | | | | 60 | |
|   N110(SAF) *3 | | | | 60 | | |
| Oil | 5 | 5 | 5 | 5 | 5 | 5 |
| Age resistor | 1 | 1 | 1 | 1 | 1 | 1 |
| Stearic acid | 2 | 2 | 2 | 2 | 2 | 2 |
| Zinc oxide | 3 | 3 | 3 | 3 | 3 | 3 |
| Sulfur | 3 | 3 | 3 | 3 | 3 | 3 |
| Valcanization accelerator (CZ) | 1 | 1 | 1 | 1 | 1 | 1 |
| 100% Modulus (kg/sq.cm) | 63 | 51 | 12 | 49 | 50 | 9 |

*1: the mean particle diameter is 23 milli-micro⁓

*2: the mean particle diameter is 29 milli-micro⁓

*3: the mean particle diameter is 18 milli-micro⁓

TABLE 3

| Tyre | Ex1 | Ex2 | Ex3 | Ex4 | Ref1 | Ref2 |
|------|-----|-----|-----|-----|------|------|
| FIELD TEST | | | | | | |
| Vibration-naturally-generating speed (km/h) | 220 | 220 | 200 | 200 | 190 | 170 |
| Vibration-damping property after disturbance (D=damped, U=undamped) | D | D | D | U | D | D |
| Durability (hrs) | 26 | 25 | 23 | 24 | 19 | 18 |
| (INDEX) | 144 | 139 | 128 | 133 | 106 | 100 |

TABLE 4

| Tyre | Ex5 | Ex6 | Ex7 | Ex8 | Ref3 | Ref4 |
|---|---|---|---|---|---|---|
| Natural rubber | 100 | 100 | 100 | 100 | 100 | 100 |
| Carbon black | | | | | | |
| N220(ISAF) *1 | | | 40 | | | 10 |
| N330(HAF) *2 | 50 | 50 | | | 60 | |
| N110(SAF) *3 | | | | 60 | | |
| Phenolic plastic*4 | 5 | 2 | 2 | 1 | | 20 |
| Stiffening agent*5 | 2 | 1 | 1 | 0.5 | | 3 |
| Oil | 5 | 5 | 5 | 5 | 5 | 5 |
| Age resistor | 1 | 1 | 1 | 1 | 1 | 1 |
| Stearic acid | 2 | 2 | 2 | 2 | 2 | 2 |
| Zinc oxide | 3 | 3 | 3 | 3 | 3 | 3 |
| Sulfur | 3 | 3 | 3 | 3 | 3 | 3 |
| Valcanization accelerator (CZ) | 1 | 1 | 1 | 1 | 1 | 1 |
| 100% Modulus (kg/sq.cm) | 51 | 47 | 40 | 57 | 54 | 28 |

*1: the mean particle diameter is 23 milli-micro

*2: the mean particle diameter is 29 milli-micro

*3: the mean particle diameter is 18 milli-micro

*4: resorcin-formaldehyde novolac primary condensation resin

*5: hexamethylene tetramine

TABLE 5

| Tyre | | Ex5 | Ex6 | Ex7 | Ex8 | Ref3 | Ref4 |
|------|------|------|------|------|------|------|------|
| FIELD TEST | | | | | | | |
| Vibration-naturally-generating speed (km./h) | | 220 | 220 | 200 | 200 | 190 | 170 |
| Vibration-damping property after disturbance (D=damped, U=undamped) | | D | D | D | U | D | D |
| Durability | (hrs) | 28 | 25 | 22 | 27 | 19 | 16 |
| | (INDEX) | 175 | 156 | 139 | 169 | 119 | 100 |

As described above, according to the present invention, the motor-cycle is provided with a carcass of a radial structure, and organic fibre cords, especially nylon cords, are used for the carcass and the breaker, and further carbon black with small mean particle diameter is used as a reinforcer for the coating rubber of the breaker, whereby ply separation in the breaker edge regions is effectively prevented.

Furthermore, the tyre is provided with bead apexes made of hard rubber and extending toward the sidewall part in the bead parts, whereby the lateral stiffness of tyre is increased, and a drawback of the conventional radial tyre is eliminated. As the result, the so called "Wobbling phenomenon" is effectively prevented, and camber thrust is increased whilst providing to the rider stable cornering.

## Claims

1. A motor-cycle tyre comprising a pair of bead cores (6), a carcass (5) of radially- arranged organic material cords, the edges (5a, 5b) of the carcass (5) being turned up around the bead cores (6) a tread (2) on the carcass, and a breaker (7) disposed between the carcass (5) and the tread (2), and extending over almost the entire width of the tyre tread, said breaker (7) comprising at least one breaker ply comprising organic fibre cords extending over the entire width of the breaker (2) and coated with a rubber composition to form said ply, the rubber composition containing 100 parts by weight of rubber, 10 to 70 parts by weight of carbon black, characterised by said rubber composition containing 0.5 to 5 parts by weight of a thermosetting resin and 0.5 to 5 parts by weight of a stiffening agent for the thermosetting resin, and the carbon black mean particle diameter being less than 25 nm.

2. A motor-cycle tyre according to claim 1 characterised in that the rubber composition contains 1 to 3 parts by weight of thermosetting resin.

3. A motor-cycle tyre according to either claim 1 or 2 characterised in that the materials for the breaker (7) and the carcass (5) are the same.

4. A motor-cycle tyre according to any one of claims 1 to 3 characterised by the reinforcing cords comprising organic fibres when modulus of elasticity is less than 1500 kgf/sq.mm.

5. A motor-cycle tyre according to any one of claims 1 to 4 characterised in that the cords of the carcass are nylon cords.

## Patentansprüche

1. Motorradreifen mit einem Paar Wulstkerne (6), einer Karkasse (5) von radial angeordneten Korden aus organischem Material, wobei die Kanten (5a, 5b) der Karkasse (5) um die Wulstkerne (6) nach oben zurück-

9

geschlagen sind, einem Laufstreifen (2) an der Karkasse, und einem zwischen der Karkasse (5) und dem Laufstreifen (2) angeordneten Gürtel (7), der sich über fast die gesamte Breite des Reifen-Laufstreifens erstreckt, wobei der Gürtel (7) mindestens eine Gürtellage umfaßt mit organischen Faserkorden, die sich über die gesamte Breite des Gürtels (2) erstrecken, und mit einer Gummimischung zur Ausbildung der Lage beschichtet sind, und die Gummimischung 100 Gew.-Teile Gummi und 10 bis 70 Gew.-Teile Kohlenstoffruß enthält, dadurch gekennzeichnet, daß die Gummimischung 0,5 bis 5 Gew.-Teile eines warmaushärtenden Harzes und 0,5 bis 5 Gew.-Teile eines Versteifungsmittels für das warmaushärtende Harz enthält und daß der Teilchendurchmesser des Kohlenstoffrusses kleiner als 25 nm ist.

2. Motorradreifen nach Anspruch 1, dadurch gekennzeichnet, daß die Gummimischung 1 bis 3 Gew.-Teile warmaushärtendes Harz enthält.

3. Motorradreifen nach einem der Ansprüche 1 oder 2, dadurch gekennzeichnet, daß die Materialien für den Gürtel (7) und die Karkasse (5) die gleichen sind.

4. Motorradreifen nach einem der Ansprüche 1 bis 3, dadurch gekennzeichnet, daß die Verstärkungskorde organische Fasern umfassen, deren Elastizitätsmodul geringer als 1500 kp/mm² ist.

5. Motorradreifen nach einem der Ansprüche 1 bis 4, dadurch gekennzeichnet, daß die Korde der Karkasse Nylonkorde sind.

## Revendications

1. Pneumatique pour motocyclette, comprenant deux tringles (6), une carcasse (5) de câblés d'une matière organique, disposés radialement, les bords (5a, 5b) de la carcasse (5) étant retournés autour des tringles (6), une bande de roulement (2) formée sur la carcasse, et une nappe sommet (7) placée entre la carcasse (5) et la bande de roulement (2) et disposée sur presque toute la largeur de la bande de roulement du pneumatique, la nappe sommet (7) comportant au moins une nappe comprenant des câblés de fibres organiques disposés sur toute la largeur de la nappe sommet (2) et revêtus d'une composition de caoutchouc afin que la nappe soit formée, la composition de caoutchouc contenant 100 parties en poids de caoutchouc et 10 à 70 parties en poids de noir de carbone, caractérisé en ce que la composition de caoutchouc contient 0,5 à 5 parties en poids d'une résine thermodurcissable et 0,5 à 5 parties en poids d'un agent de renforcement de la résine thermodurcissable, et le diamètre particulaire moyen du noir de carbone est inférieur à 25 nm.

2. Pneumatique pour motocyclette selon la revendication 1, caractérisé en ce que la composition de caoutchouc contient 1 à 3 parties en poids de résine thermodurcissable.

3. Pneumatique pour motocyclette selon la revendication 1 ou 2, caractérisé en ce que les matières de la nappe sommet (7) et de la carcasse (5) sont les mêmes.

4. Pneumatique pour motocyclette selon l'une quelconque des revendications 1 à 3, caractérisé en ce que les câblés de renforcement contiennent des fibres organiques dont le module d'élasticité est inférieur à 1,5 · 10¹⁰ Pa (1500 kgf/mm²).

5. Pneumatique pour motocyclette selon l'une quelconque des revendications 1 à 4, caractérisé en ce que les câblés de la carcasse sont des câblés de "Nylon".

# FIG.1

# FIG.2 (a)

# FIG.2(b)